Europäisches Patentamt

European Patent Office

Office européen des brevets

(11) Numéro de publication: **0 323 353 B1**

## FASCICULE DE BREVET EUROPEEN

(45) Date de publication de fascicule du brevet: **15.06.94**  (51) Int. Cl.⁵: **B29D 11/00**

(21) Numéro de dépôt: **88403347.3**

(22) Date de dépôt: **28.12.88**

(54) **Procédé de préparation d'optiques organiques à saut(s) d'indice et application à la réalisation de préformes de fibres optiques polymères.**

(30) Priorité: **30.12.87 FR 8718396**

(43) Date de publication de la demande:
**05.07.89 Bulletin 89/27**

(45) Mention de la délivrance du brevet:
**15.06.94 Bulletin 94/24**

(84) Etats contractants désignés:
**AT BE CH DE ES FR GB GR IT LI LU NL SE**

(56) Documents cités:
EP-A- 0 098 578     EP-A- 0 109 586
EP-A- 0 128 516     EP-A- 0 131 058
EP-A- 0 151 363     FR-A- 2 203 837
FR-A- 2 405 806     FR-A- 2 493 997
FR-A- 2 600 937     US-A- 3 380 980
US-A- 4 138 194

(73) Titulaire: **ELF ATOCHEM S.A.**
**4 & 8, Cours Michelet**
**La Défense 10**
**F-92800 Puteaux(FR)**

(72) Inventeur: **Barbier, Yves**
**911, Rue Basse**
**F-60700 Pontpoint(FR)**
Inventeur: **Guillard, Yves**
**7 Ouai D'Amont**
**F-60100 Creil(FR)**
Inventeur: **Perrin, Christian**
**4, Rue de l'Aviation**
**F-78500 Sartrouville(FR)**

(74) Mandataire: **Rochet, Michel**
**ELF ATOCHEM S.A.**
**Département Propriété Industrielle**
**4-8, Cours Michelet**
**La Défense 10 - Cedex 42**
**F-92091 Paris-La-Défense (FR)**

Rank Xerox (UK) Business Services
(3.10/3.09/3.3.3)

## Description

La présente invention a pour objet un procédé de préparation d'optiques organiques à saut(s) d'indice applicable à la réalisation de préformes de fibres optiques polymères.

Par optiques organiques à saut(s) d'indice au sens de la présente invention, on entend tout dispositif optique composé d'au moins deux couches jointives à base de polymère organiques, chacune de ces couches possédant un indice de réfraction différent. Parmi les optiques organiques à saut(s) d'indice, on peut citer les fibres optiques polymères présentant généralement une structure concentrique coeur-gaine en polymères organiques transparents, le coeur possédant un indice de réfraction supérieur à celui de la gaine.

Les fibres optiques polymères obtenues par les procédés connus de préparation (voir notamment FR-A-2.405.806) ne sont pas totalement satisfaisantes. En effet la surface de la préforme de coeur, y étant exposée à l'atmosphère ambiante avant d'être extrudée et revêtue, est nécessairement polluée, ce qui se traduit par la présence de poussières et de microbulles à l'interface coeur-gaine, et en conséquence, à un coefficient d'atténuation élevé.

Dans le but d'améliorer la qualité de l'interface coeur-gaihe, le brevet français n° 2.557.495 propose un procédé utilisant la polymérisation par irradiation UV.

Dans les préformes ainsi fabriquées, on observe malgré tout la présence de microbulles, des irrégularités sur la surface externe ainsi qu'un jaunissement prématuré dans le temps.

La présente invention a pour objectif un procédé de préparation d'optiques organiques à saut(s) d'indice ne présentant pas les inconvénients des procédés précités.

Plus précisément, la présente invention a pour objet un procédé de préparation d'optiques organiques à saut(s) d'indice, sous atmosphère inerte, caractérisé en ce que sur au moins une partie de la surface propre d'une optique organique monocouche ou multicouches, on polymérise sous une pression d'au moins 5 bars un mélange comprenant au moins un prépolymère, au moins un initiateur de polymérisation et au moins un agent de transfert de chaîne.

Par prépolymère au sens de la présente invention, on entend un mélange de monomère(s) et de polymère(s) obtenus par conversion de ce(s) monomère(s), le taux de conversion étant égal au rapport de la quantité en poids de monomères polymérisés sur la quantité totale en poids de monomères. Ce taux de conversion est réglé par les conditions de polymérisation, de température et par la nature des monomères.

Ainsi, pour une optique organique monocouche ou multicouches à base de monomères (méth)-acryliques, généralement essentiellement du méthacrylate de méthyle, recouverte d'une couche externe de prépolymères à base essentiellement de monomères (méth)acryliques, tels que, par exemple, des (méth)-acrylates d'alkyle et des (méth)acrylates d'alkyle fluorés avec une température de début de cycle de polymérisation de 30° à 120°C atteignant 120° à 160°C en fin de cycle, on a découvert qu'en opérant sous une pression d'au moins 5 bars et en utilisant pour ladite couche externe un prépolymère ayant un taux de conversion d'au moins 38%, on obtient une interface à saut d'indice parfaite, c'est-à-dire sans zone diffusante ni autres irrégularités, par exemple des microbulles. De plus, l'interface est exempte de toutes irrégularités même si la composition de la couche externe a un ou plusieurs monomères en commun avec l'optique organique. De manière surprenante, le taux de conversion du prépolymère constitutif de la couche externe peut même descendre à 35% quand on dépose prélablement sur la surface de l'optique organique monocouche ou multicouches, un polymère A en solution dans un solvant organique inerte, ledit polymère A ayant un poids moléculaire moyen en poids compris entre 30.000 et 250.000 et de préférence entre 50.000 et 150.000 et un indice de réfraction compris entre celui de la couche sur laquelle le dépôt est effectué et celui de la couche externe sera déposèe ultérieurement. Ladite solution de polymère A doit posséder une teneur en extrait sec comprise entre 5 et 50% environ en poids, de préférence entre 15 et 30% en poids. Après le dépôt de la solution du polymère A sur l'optique organique monocouche ou multicouches, on soumet cette dernière à une opération de séchage à température modérée, par exemple dans une étuve à une température ne dépassant pas 50°C environ.

L'application du polymère en solution peut être effectuée en plongeant l'optique organique monocouche ou multicouches dans la solution ou en faisant passer cette optique sous une rampe d'arrosage.

Des solvants organiques appropriés à ce mode de réalisation sont notamment les solvants halogènés tels que le dichlorométhane, le chloroforme, le dichloro -1,2 - éthane, le dichloro -16,1 - éthane ainsi que les solvants cétoniques tels que l'acétone, la méthyléthylcétone, la méthylisobutylcétone, l'isophorone, ou une combinaison d'un ou plusieurs solvants halogénés et d'un ou plusieurs solvants cétoniques.

Des polymères (A) appropriés sont obtenus par polymérisation de (en % en poids) :
- 50% à 100% d'au moins un monomère fluoré de formule

$H_2C = C(R_1)-C(O)-O-(C(R_2)(R_3)-C_nF_{2n+1-m}H_m$ dans laquelle :

. $R_1$ est un radical méthyle, un atome d'hydrogène, de chlore ou de fluor,
. $R_2$ et $R_3$, identiques ou différents, sont choisis parmi H, $CH_3$, $CH_2$- $CH_3$ ou $CF_3$,
. n est compris entre 1 et 20,
. m ests compris entre 2 et 2n, et
- 0 et 50% d'au moins un monomère vinylique.

De préférence, le monomère fluoré est choisi parmi l'acrylate de 2,2,2- trifluoroéthyle, le méthacrylate de 2,2,2- trifluoroéthyle, le (méth)acrylate de 2,2,2,3,4,4,4 hexafluorobutyle et le (méth)acrylate de 2,2,3,3-tétrafluoropropyle.

Parmi les monomères vinyliques convenant à la préparation du polymère A, on peut citer les monomères (méth)acryliques tels que l'acide (méth)acrylique, les (méth)acrylates tels que l'acrylate d'éthyle, l'acrylate de butyle, l'acrylate de 2 - éthylhexyle, le méthacrylate de méthyle, le méthacrylate de glycidyle ou encore des (méth)acrylates chlorés tels que le méthacrylate de 2 - chloroéthyle ou le méthacrylate de 2,2,2- trichloroéthyle.

Le polymère A peut être préparé par polymérisation en solution à une température comprise entre 40°C et 120°C environ, de préférence entre 60 et 90°C, en présence d'un catalyseur de polymérisation, à la pression atmosphérique ou sous pression.

Parmi les catalyseurs convenant, on peut citer les peroxydes tels que le peroxydes de benzoyle, le peroxyde de lauroyle, le perdécanoate de tertiobutyle, le perbenzoate de tertiobutyle, le peroxyde d'acétylcyclohexane sulfonyle, le peroxyde de méthyléthylcétone, le peroxyde de tertiobutyle, les peroxydicarbonates tels que le peroxydicarbonate de bis(-tertiobutyl-4-cyclohexyle), le peroxydicarbonate de n-butyle, le peroxydicarbone de cyclohexyle, le peroxydicarbonate de bis-éthyle-2-héxyle), le peroxydicarbonate d'isopropyle. On peut également utiliser des composés azo tels que l'azo-2,2'-bisisobutyronitrile, l'acide azo-4,4'-bis (cyano-4-pentanoïque). Les quantités de catalyseur à mettre en oeuvre varient de 0,1 à 2% en poids environ par rapport aux monomères à polymériser.

Les conditions opératoires précités conviennent parfaitement à la préparation des optiques organiques à base essentiellement de monomères (méth)acryliques, dont, par exemple, la dernière couche à recouvrir comprend au moins 80% en poids de méthacrylate de méthyle et au plus 20% en poids d'un monomère copolymérisable avec le méthacrylate de méthyle et/ou dont la couche externe comprend, pour 100 parties en poids :
- plus de 60 parties en poids de méthacrylate de 2,2,2-trifluoro-éthyle,
- 20 à 40 parties en poids de méthacrylate de méthyle,
- 0 à 10 parties en poids d'autres monomères vinyliques.

Les meilleures qualités d'interfaces ont été obtenues avec une pression d'au moins 15 bars.

Le procédé selon l'invention est applicable à la préparation de préformes de fibres optiques polymères.

Selon une mise en oeuvre préférée de l'invention, on prépare les préformes de fibres optiques de la manière suivante :

## A - PREPARATION DU COEUR DE LA PREFORME

Le coeur de la préforme peut être préparé par usinage de blocs de polymère, par extrusion de profilé cylindrique, ou encore par polymérisation sous pression ou par irradiation UV d'un mélange de monomères ou de prépolymères.

De préférence, le coeur de la préforme est préparé par polymérisation d'un mélange d'au moins un prépolymère ayant un taux de conversion d'au moins 30 % sous une pression d'au moins 5 bars.

Dans ces conditions, en effet, on obtient un coeur de préforme exempt d'irrégularités, telles que des microbulles, et dont la surface externe est uniforme.

La préparation du prépolymère de coeur est effectuée dans un réacteur propre, fermé et sous atmosphère d'un gaz inerte tel que l'azote ou l'argon. Préalablement à la prépolymérisation, chaque constituant du mélange à prépolymériser est purifié afin d'éliminer les impuretés qui absorbent des longueurs d'onde, et en particulier l'inhibiteur de polymérisation contenu dans des monomères. La purification de ces constituants est effectuée selon de techniques bien connues, parmi lesquelles la distillation sous vide. De préférence, les monomères sont soumis à un traitement à la chaux sodée et/ou d'hydrure de calcium, puis passés sur lit d'alumine neutre ou basique, distillés, et enfin filtrés sur un filtre qui a un diamètre d'ouverture d'environ 0,1 micron, de préférence 0,02 micron.

D'autre part, afin d'éviter la contamination des constituants purifiés lors de leur transfert dans le réacteur, ils sont transférés au moyen de conduites sous atmosphère d'un gaz inerte tel que l'azote et l'argon.

La purification du réacteur est quant elle est effectuée par lavage avec un liquide de nettoyage, par exemple l'acétone, puis par séchage suivi d'une purge sous atmosphère inerte. Dans le réacteur propre et fermé, on introduit le mélange à polymériser dont chaque constituant a été purifié. Eventuellement, le mélange est purgé à l'aide d'un gaz inerte, tel que l'argon ou l'azote. Le mélange est ensuite mis sous agitation. La prépolymérisation est effectuée à une température de l'ordre de 70°C à pression atmosphérique, ou bien à température inférieure et sous pression.

Dès que le taux de conversion du prépolymère atteint au moins 30 %, on ralentit la prépolymérisation en refroidissant le réacteur.

Le prépolymère ainsi obtenu est coulé dans des tubes en matériau inerte tel que le verre borosilicaté, la silice ou l'inox, ces tubes ayant été au préalable lavés à l'aide d'un liquide de nettoyage tel que l'acétone puis séchés sous vide. De préférence, ces tubes sont fermés à leur extrémité inférieure à l'aide d'un bouchon choisi en matériau inerte par rapport au prépolymère et élastique de manière à rester en contact avec le mélange réactionnel lors de la polymérisation qui se traduit par une diminution du volume du mélange réactionnel. La pression imposée lors de la polymérisation contribue également à maintenir le contact entre le bouchon et le mélange à polymériser.

Les tubes sont ensuite fermés à leur extrémité supérieure avec des bouchons en matériau inerte et élastiques pour les raisons précitées.

Dans un réacteur fermé, sous atmosphère inerte on procède à la polymérisation du prépolymère tel que décrit précédemment.

Dès que le taux de conversion atteint 99 % à 99,9 %, on soumet le réacteur à un refroidissement progressif ; puis on démoule le coeur de préforme. Conformément à cette technique, on prépare des coeurs de dimensions diverses, dont le diamètre est généralement compris entre 6 et 80 mm.

B - PREPARATION DU PREPOLYMERE CONSTITUTIF DE LA GAINE

Dans une première étape, on procède à la purification des monomères comme précisé dans la préparation du coeur.

La prépolymérisation du mélange comprenant au moins un monomère, au moins un inititateur de polymérisation et au moins un agent de transfert est effectuée dans un réacteur fermé, propre, c'est-à-dire préalablement lavé et séché sous vide, sous atmosphère inerte ; l'introduction de ce mélange est de préférence réalisée au moyen de conduites sous atmosphère inerte reliant le réacteur de prépolymérisation et les flacons dans lesquels sont recueillis les produits à l'issue de l'opération de purification.

Le mélange est ensuite mis sous agitation. La prépolymérisation est effectuée à une température de l'ordre de 70°C à pression atmosphérique et sous atmosphère inerte.

Dès que le taux de conversion atteint, dans le cas de monomères (méth)acryliques, la valeur d'au moins 38 %, on ralentit la prépolymérisation en refroidissant le réacteur, en général jusqu'à une température de l'ordre de 50°C.

C - PREPARATION DE LA PREFORME PAR REVETEMENT DU COEUR AVEC UNE GAINE.

La première étape concerne la purification des éléments constitutifs de la préforme, tels que le barreau de coeur et les éléments qui seront en contact avec la préforme tels que le moule de la préforme s'ils ont été exposés à l'atmosphère ambiante.

Le barreau de coeur est lavé avec un agent de nettoyage inerte constitué par exemple par une partie du mélange de prépolymères de gaine, puis séché sous vide à une température de 30° à 90°C.

La surface externe du barreau de coeur peut également être dégazée par chauffage du barreau de 30° à 90°C sous pression réduite.

Le moule de la préforme, généralement en silice, inox ou verre borosilicaté, et purifié par lavage suivi d'un séchage sous vide.

Dans une deuxième étape, de préférence sous atmosphère inerte, on place le barreau de coeur dans le moule de manière à ce que les axes de symétrie du coeur et du moule coïncident. Ce positionnement est facilité au moyen d'un bouchon qui ferme le moule à son extrémité inférieure, et qui comporte, sur sa face interne placée dans le moule, une cavité centrale et cylindrique de diamètre égal à celui du barreau de coeur. Puis, on coule dans le moule, le mélange comprenant le prépolymère, l'initiateur de polymérisation et l'agent de transfert de chaine. Le remplissage du moule de la préforme peut également être réalisé en introduisant en premier le mélange à polymériser et ensuite le barreau de coeur.

Ensuite, on procède à nouveau à un dégazage sous vide, progressivement et pendant une période suffisamment longue pour éliminer les traces de gaz introduites dans le prépolymère lors de son introduction dans le moule. Le moule de préforme est ensuite fermé à l'aide d'au moins un bouchon élastique capable de rester en contact avec le mélange réactionnel pendant la polymérisation sous l'influence de la pression.

De préférence, les extrémités du moule sont fermées avec des bouchons élastiques choisis en matériau inerte par rapport au prépolymère, afin de minimiser l'apparition de microbulles en surface dans la préforme et de concentrer les retraits sur les deux extrémités.

On réalise ensuite l'opération de polymérisation comme indiqué précédemment.

Dès que la polymérisation est terminée, on refroidit le moule tout en maintenant la pression, puis on démoule la préforme de fibre optique polymère ainsi obtenue.

En se conformant au procédé selon l'invention, on prépare des préformes de fibre optique polymère dont les gaines ont généralement une épaisseur de 1 à 40 mm environ.

Eventuellement, la préforme peut être revêtue d'une nouvelle couche de protection, d'indice de réfraction différent de celui de la gaine. Pour ce faire, on reproduit de préférence les étapes (B) et (C) du mode opératoire décrit ci-dessus.

Finalement, la préforme ainsi obtenue peut être fibrée pour donner une fibre optique par des techniques bien connues telles que le fibrage à chaud de la préforme que l'on étire au travers d'une filière ou encore par filage à chaud de la préforme au moyen d'une extrudeuse à piston.

Parmi les monomères (méth)acryliques convenant à la préparation de la première couche de l'optique organique, telle que le coeur d'une fibre optique polymère, on peut citer notamment le méthacrylate de méthyle, le méthacrylate de méthyle deutéré, l'acrylate de méthyle, l'acrylate d'éthyle, l'acrylate de propyle, l'acrylate de butyle, l'acrylate d'éthyle-2-hexyle, les esters méthacryliques correspondants et d'autres esters tels que le méthacrylate de phényle, le méthacrylate de cyclohexyle, le méthacrylate de benzyle. Ces monomères peuvent éventuellement être copolymérisés avec une faible proportion, par exemple jusqu'à 20 % environ en poids d'un comonomère tel que le styrène et ces homologues substitués (halogénés ou alkylés) sur le noyau aromatique ou sur la fonction vinylique tels que 1'$\alpha$-méthylstyrène, 1'$\alpha$-chlorostyrène.

Parmi les monomères convenant à la prépration de la deuxième couche, telle que la gaine d'une préforme de fibre optique polymère, on peut citer les (méth)acrylates d'alkyles fluorés, tels que le (méth)-acrylate de 2,2,2-trifluoroéthyle et ceux cités dans les brevets français 2.493.997 et 2.405.807, auxquels on adjoint éventuellement un ou plusieurs comonomères choisis, par exemple, parmi les esters (méth)-acryliques tels que le (méth)acrylate de méthyle, le (méth)acrylate d'éthyle, le (méth)acrylate de propyle, le (méth)acrylate de butyle, le (méth)acrylate d'éthyle-2-hexyle.

Parmi les initiateurs de polymérisation convenant à l'invention, on peut citer les initiateurs de type azoïque, tels que le 2,2'-azo-bis(isobutyronitrile) l'acide azo 4,4' bis(cyano-4-pentanoïque). Conviennent également les peroxydes tels que le peroxyde de benzoyle, le peroxyde de lauryle, le perdécanoate de tertiobutyle, le perbenzoate de tertiobutyle, les peroxydicarbonates tels que le peroxydicarbonate de bis (tertiobutyl-4-cyclohexyle), le peroxydicarbonate de n-butyle, le peroxydicarbonate de cyclohexyle, le peroxydicarbonate de (bis-éthyle-2-hexyle), le peroxydicarbonate d'isopropyle. Les quantités d'initiateur à mettre en oeuvre dans le procédé selon l'invention varient de 0,005 à 0,5 % en poids par rapport aux monomères à polymériser.

Parmi les agents de transfert de chaine convenant à l'invention, on peut citer les mercaptans, tels que le n-butyl-mercaptan, le n-dodécylmercaptan, le n-lauryl-mercaptan. Conviennent également les agents de transfert de chaines cités dans le brevet français 2.405.807. Les quantités d'agent de transfert de chaine à mettre en oeuvre dans le procédé selon l'invention varient de 0,01 à 0,5 % en poids par rapport aux monomères à polymériser.

Il va de soi que la présente invention n'est pas limitée aux préformes de fibres optiques polymères mais s'étend à tous les dispositifs organiques polymères mono et multi-couches. De même, la présente invention n'est en aucun cas limitée à des dispositifs de forme cylindrique mais s'étend à tous les dispositifs optiques organiques quelle que soit leur forme.

Le procédé selon l'invention est avantageux à plus d'un titre.

Les optiques organiques à saut(s) d'indice préparés conformément au procédé selon l'invention possèdent des interfaces exemptes d'irrégularités dues à la présence d'impuretés ou de microbulles et ne comportent aucune zone diffusante, quelle que soit la composition du prépolymère utilisé pour revêtir le matériau optique organique.

Grâce au procédé selon l'invention, on prépare des fibres optiques polymères ayant une perte de transmission de l'ordre de 100 décibels/km à une longueur d'onde de 570 nm.

D'autres caractéristiques et avantages de l'invention apparaîtront à la lecture des exemples non limitatifs suivants :

EXEMPLE 1

A - PREPARATION DU BARREAU DE COEUR

A.1 Préparation du mélange à polymériser et du réacteur

Le réacteur à double enveloppe est lavé à l'acétone, vidangé puis séché.

Le mélange à prépolymériser est constitué de 100 parties en poids de méthacrylate de méthyle (MAM), de 0,05 partie en poids de 2,2'-azo-bis(isobutyronitrile) (AIBN), et de 0,31 partie en poids de n-dodécyl-mercaptan (DDM). Préalablement au mélange, chaque constituant est purifié comme suit :
- le MAM est traité à la chaux sodée, passé sur un lit d'aluminium puis distillé à 54°C sous 130 millibars, et enfin filtré sur filtre de porosité 0,1 micron
- l'AIBN et le DDM sont distillés sous pression réduite.

En attendant leur introduction dans le réacteur, MAM, AIBN et DDM sont conservés sous atmosphère inerte d'azote, séparément dans des ampoules qui sont reliées au réacteur par des conduites.

A.2 - Préparation du prépolymère

Le réacteur de prépolymérisation est fermé, purgé à l'azote, puis mis en température au moyen d'une circulation d'eau à 70°C dans la double enveloppe. Dès que la température dans le réacteur atteint 60°C, on introduit le MAM, l'AIBN et le DDM, puis le mélange est mis sous agitation et la température est portée à environ 70°C sous la pression atmosphérique.

Au cours de la prépolymérisation, on mesure régulièrement le taux de conversion du mélange par prélèvement d'une petite quantité qu'on analyse par chromatographie en phase gazeuse.

Dès que le taux de conversion atteint 30 %, la prépolymérisation est ralentie en refroidissant le réacteur jusqu'à 25°C.

A.3 - Préparation du barreau de coeur

Les barreaux de coeur sont préparés dans des tubes en verre borosilicaté de diamètre intérieur égal à 37 mm et lavés à l'eau puis à l'acétone et séchés sous vide. La base de ces tubes est fermée d'un bouchon en élastomère. Le mélange de prépolymère est réchauffé jusqu'à environ 35°C puis introduit progressivement dans les tubes sous atmosphère inerte.

On soumet ensuite les tubes à une opération de dégazage jusqu'à l'obtention d'un vide de 133 millibars pendant environ 1 heure.

A la fin de cette opération, les tubes sont fermés à leur extrémité supérieure avec des bouchons en élastomère.

Les tubes sont placés dans un autoclave qui, après sa fermeture, est purgé et mis sous atmosphère d'azote.

On procède ensuite à la polymérisation en imposant une pression de 15 bars et le cycle de polymérisation suivant :

| Temps écoulé (en h) | Température dans l'autoclave en °C | Taux de conversion en % |
|---|---|---|
| 0 | 50 | 30 |
| 20 | 88 | 95 |
| 25 | 142 | 97 |
| 28-30 | 167 | 99,5 |

On diminue ensuite progressivement la température, la pression de 15 bars étant maintenue. Dès que la température dans l'autoclave atteint 25°C, on diminue progressivement la pression jusqu'à l atmosphère.

Les barreaux de coeur obtenus sont parfaitement transparents, exempts de défauts tels que des microbulles ou impuretés. De plus, leur surface externe ne comporte pas d'irrégularités dues au retrait lors de la polymérisation. Ils sont ensuite séchés sous vide de 20 millibars, afin d'éliminer les traces de monomères résiduels, puis conservés sous atmosphère d'azote.

## B - PREPARATION DE LA PREFORME COEUR-GAINE DE FIBRE OPTIQUE POLYMERE

### B.1 Préparation du prépolymère constitutif de la gaine

Le mélange à polymériser est constitué de (en parties en poids) :

| | |
|---|---|
| - Méthacrylate de 2,2,2-trifluoroéthyle | 75 |
| -MAM | 20 |
| - Acrylate d'éthyle-2-hexyle | 5 |
| - AIBN | 0,05 |
| - peroxyde de tertio-butyle | 0,02 |
| - DDM | 0,1 |

Les monomères sont purifiés corne indiqué ci-dessus. Les initiateurs de polymérisation et l'agent de transfert de chaine sont purifiés par distillation sous vide. En attendant leur introduction dans le réacteur, chaque constituant est conservé séparément, sous azote, dans des ampoules qui sont reliées au réacteur par des conduites.

Le réacteur est également lavé à l'acétone, vidangé, puis séché. Ensuite, le réacteur est fermé puis purgé et mis sous azote. Par une circulation d'eau dans la double enveloppe, on impose une température de 70°C dans le réacteur. On y introduit alors les constituants du mélange à prépolymériser que l'on met ensuite sous agitation. La prépolymérisation est effectuée à 70°C sous atmosphère inerte, à la pression atmosphérique.

Après 150 minutes, on arrête la prépolymérisation en refroidissant le réacteur à 50°C. Le taux de conversion du prépolymère mesuré par chromatographie en phase gazeuse est de 43 %.

### B.2 - Préparation de la préforme coeur-gaine

Les préformes sont préparées dans des tubes en verre borosilicaté, de diamètre intérieur égal à 42 mm et lavés à l'eau, puis à l'acétone et séchés sous vide.

La base des tubes est fermée à l'aide de bouchons en élastomère comportant sur leur côté disposé dans le tube une cavité centrale et cyclindrique dont les dimensions correspondent à celles de l'embout des barreaux de coeur.

On coule progressivement le prépolymère dans les tubes qu'on soumet à un dégazage progressif (30 minutes à 533 millibars puis 15 minutes à 266 millibars et 15 minutes à 133 millibars). Ensuite, on introduit dans chaque tube le barreau de coeur en position centrale de manière que son grand axe coïncide avec celui du tube.

On place les tubes ainsi remplis dans un autoclave que l'on purge à l'azote dès sa fermeture.

On procède ensuite à la polymérisation en imposant une pression de 15 bars et le cycle de polymérisation suivant :

| Temps écoulé (en h) | Température dans l'autoclave en °C | Taux de conversion en % |
|---|---|---|
| 0 | 70 | 43,0 |
| 10 | 90 | 96,0 |
| 12 | 130 | 99,2 |
| 14 | 130 | 99,6 |

On diminue alors progressivement la température, la pression de 15 bars étant maintenue. Dès que la température dans l'autoclave atteint 25°C, on diminue progressivement la pression jusqu'à 1 atmosphère.

Les préformes coeur-gaine obtenues sont parfaitement transparentes et l'interface est totalement exempte de zone de diffusion et d'impuretés. De plus, la surface externe de la préforme est parfaitement régulière.

EXEMPLES 2 à 5

On répète le mode opératoire de l'exemple 1 à l'exception du taux de conversion du prépolymère introduit dans les tubes de préforme coeur-gaine, réglé par la durée de la prépolymérisation code indiqué au tableau I ci-après.

TABLEAU I

| Exemple | Taux de conversion ( % ) | Durée de la prépolymérisation (min) | Etat de l'interface |
|---------|--------------------------|-------------------------------------|---------------------|
| 2 | 0 | 0 | diffusante |
| 3 | 30,5 | 100 | diffusante |
| 4 | 35,0 | 120 | légèrement diffusante |
| 5 | 38,0 | 130 | transparente |

EXEMPLES 6 et 7

On répète le mode opératoire de l'exemple 5, à l'exception de la pression imposée lors de la préparation de la préforme coeur-gaine, indiquée au tableau II ci-après.

TABLEAU II

| Exemple | Pression (bars) | Etat de l'interface coeur-gaine |
|---------|-----------------|---------------------------------|
| 6 | 10 | transparente |
| 7 | 5 | transparente |

Dans les conditions des exemples 6 et 7, les préformes ne comportent pas d'irrégularités sur leur surface externe ni de microbulles.

EXEMPLES 8 à 15

On répète le mode opératoire de l'exemple 1 excepté la composition (en parties en poids) du mélange constitutif de la gaine de la préforme ainsi que le taux de conversion du prépolymère de gaine utilisé dans la préparation de la préforme coeur-gaine (étape B.2).

Les résultats de ces exemples sont rassemblés au tableau III ci-après dans lequel on utilise les abréviations suivantes /

- MATRIFE : méthacrylate de 2,2,2-trifluoroéthyle,
- AM : acrylate de méthyle
- ATRIFE : acrylate de 2,2,2-trifluoroéthyle
- PTB : peroxyde de tertiobutyle
- PBB : peroxybenzoate de tertio-butyle
- BTM : n-butyl mercaptan.

TABLEAU III

| Exemple | Composition du prépolymère (en parties en poids) | | Taux de conversion du prépolymère de gaine (en %) | Etat de l'interface |
|---|---|---|---|---|
| 8 | MAM<br>MATRIFE<br>AM<br>AIBN<br>PTB<br>DDM | 20<br>75<br>5<br>0,05<br>0,02<br>0,1 | 46,6 | transparente |
| 9 | MAM<br>MATRIFE<br>AM<br>AIBN<br>PTB<br>DDM | 20<br>75<br>5<br>0,05<br>0,02<br>0,1 | 38 | transparente |
| 10 | MAM<br>MATRIFE<br>AM<br>PBB<br>AIBN<br>BTM | 25<br>70<br>5<br>0,02<br>0,05<br>0,1 | 44,2 | transparente |

## TABLEAU III (suite)

| Exemple | Composition du prépolymère (en parties en poids) | | Taux de conversion du prépolymère de gaine (en %) | Etat de l'interface |
|---|---|---|---|---|
| 11 | MAM<br>MATRIFE<br>AM<br>PBB<br>AIBN<br>BTM | 25<br>70<br>5<br>0,02<br>0,05<br>0,1 | 38 | transparente |
| 12 | MAM<br>MATRIFE<br>ATRIFE<br>AIBN<br>PTB<br>DDM | 20<br>60<br>20<br>0,05<br>0,02<br>0,1 | 45,9 | transparente |
| 13 | MAM<br>MATRIFE<br>AIBN<br>PTB<br>DDM | 20<br>60<br>0,05<br>0,02<br>0,1 | 38 | transparente |
| 14 | MATRIFE<br>AIBN<br>BTM<br>DDM | 100<br>0,05<br>0,02<br>0,07 | 43,8 | transparente |
| 15 | MATRIFE<br>AIBN<br>BTM<br>DDM | 100<br>0,05<br>0,02<br>0,07 | 38 | transparente |

## EXEMPLES 16 à 18

On répète le mode opératoire de l'exemple 1, à l'exception du fait que l'on insère un polymère entre le coeur et la gaine. En conséquence, à la fin de l'étape A.3 de l'exemple 1, on applique sur le barreau de coeur une solution de polymère puis on le soumet à une opération de séchage pendant 1 heure à 40°C, suivi d'un séchage pendant 30 minutes à 80°C et enfin d'un séchage pendant 30 minutes à 80°C sous un vide de 0,4 bar. On poursuit ensuite le mode opératoire décrit dans l'exemple 1 dans les étapes B.1 et B.2, la seule différence étant que l'on arrête la prépolymérisation dès que le taux de conversion du prépolymère de gaine atteint 35 % en poids, c'est-à-dire, après 2 heures de polymérisation.

Le polymère inséré entre le coeur et la gaine est préparé en polymérisant en solution à la pression atmosphérique à 65°C dans les exemples 15 et 17 et à 78°C dans l'exemple 16, un mélange de monomères en présence d'un initiateur pendant 10 heures dans les exemples 16 et 17 et 8 heures dans l'exemple 15. Ensuite la solution de polymère obtenue est refroidie et diluée avec de la méthyléthylcétone jusqu'à l'obtention de la teneur en extrait sec indiquée dans le tableau IV ci-après.

La composition (en parties en poids) de la solution de polymère ainsi que les résultats des exemples 15 à 17 sont rassemblés au tableau IV ci-après, dans lequel on utilise les abréviations supplémentaires suivantes :

AMA      : acide méthacrylique
P        : le peroxydicarbonate de bis (4 ter-butyl cyclohexyle)
MIBC     : méthylisobutyl cétone
DCE      : dichloro -1,2-éthane
MEC      : méthyléthylcétone
DCM      : dichlorométhane
PAS      : peroxyde d'acétylcyclohexane sulfonyle à 28 % dans le phtalate.

### TABLEAU IV

| Exemple | Composition de la solution de polymère avant dilution | | Poids moléculaire moyen en poids du polymère | Extrait (% en poids) sec | Etat de l'interface coeur-gaine |
|---|---|---|---|---|---|
| 15 | MATRIFE | 100 | 140.000 | 15 | transparente |
| | AMA | 2 | | | |
| | MAM | 1 | | | |
| | P | 0,3 | | | |
| | MIBC | 100 | | | |
| | DCE | 100 | | | |
| 16 | MATRIFE | 75 | 115.000 | 18 | transparente |
| | ATRIFE | 25 | | | |
| | AMA | 2 | | | |
| | MAM | 1 | | | |
| | P | 0,5 | | | |
| | DCE | 150 | | | |
| | MEC | 150 | | | |
| 17 | MAM | 25 | 65.000 | 20 | transparente |
| | MATRIFE | 75 | | | |
| | AMA | 2 | | | |
| | PAS | 0,2 | | | |
| | P | 0,2 | | | |
| | DCM | 150 | | | |
| | DEC | 150 | | | |

## Revendications

1. Procédé de préparation d'optiques organiques à saut(s) d'indice, à base de polymères organiques, sous atmosphère inerte, caractérisé en ce que sur au moins une partie de la surface propre d'une optique organique monocouche ou multicouche, on forme une nouvelle couche en polymérisant sous une pression d'au moins 5 bars, un mélange comprenant au moins un prépolymère essentiellement à base de monomères (meth)acryliques, au moins un initiateur de polymérisation et au moins un agent de transfert de chaine.

**2.** Procédé selon la revendication 1, caractérisé en ce que l'optique organique est à base essentiellement de monomères (méth)acryliques, en ce que le prépolymère destiné à former la nouvelle couche est à base d'au moins un monomère (méth)acrylique et en ce que la polymérisation est effectuée avec une température de début de cycle de 30° à 120°C atteignant en fin de cycle 120° à 160°C.

**3.** Procédé conforme à l'une des revendications 1 et 2 caractérisé en ce que la polymérisation est effectuée sous une pression de 15 bars.

**4.** Procédé conforme à l'une des revendications 1 à 3 caractérisé en ce que les monomères (méth)-acryliques utilisés pour la préparation de l'optique organique monocouche ou multicouche sont choisis parmi le (méth)acrylate de méthyle, le méthacrylate de méthyle deutéré, le (meth)acrylate d'éthyle, le (méth)acrylate de propyle, le (méth)acrylate de butyle, le (méth)acrylate d'éthyl-2-hexyle, le méthacrylate de phényle, le méthacrylate de cyclohexyle, le méthacrylate de benzyle.

**5.** Procédé conforme à la revendication 4, caractérisé en ce que les monomères (méth)acryliques sont associés à des comonomères en quantité jusqu'à 20 % en poids et choisis dans le groupe formé par le styrène et ses homologues substitués par des halogènes ou des groupements alkyle sur le noyau aromatique ou sur la fonction vinylique.

**6.** Procédé conforme à la revendication 5, caractérisé en ce que la couche de l'optique organique à recouvrir est obtenue à partir d'un mélange de monomères comprenant au moins 80 % en poids de méthacrylate de méthyle et au plus 20 % en poids d'un monomère copolymérisable avec le méthacrylate de méthyle .

**7.** Procédé conforme à l'une des revendications 1 à 6 caractérisé en ce que les monomères servant à la formation de la nouvelle couche déposée sur l'optique organique monocouche ou multicouche sont choisis parmi les (méth)acrylates d'alkyle et les (méth)acrylates d'alkyle fluoré, auxquels sont éventuellement ajoutés un ou plusieurs monomère(s) choisi(s) parmi le (méth)acrylate de méthyle, le (méth)-acrylate d'éthyle, le (méth)acrylate de propyle, le (méth)acrylate de butyle et le (méth)acrylate d'éthyl-2-hexyle.

**8.** Procédé conforme à la revendication 6 caractérisé en ce que la nouvelle couche comprend, pour 100 parties en poids, plus de 60 parties en poids de méthacrylate de 2,2,2-trifluoroéthyle, 20 à 40 parties en poids de méthacrylate de méthyle et 0 à 10 parties en poids d'autres monomères vinyliques.

**9.** Procédé conforme à l'une des revendications 2 à 8 caractérisé en ce que le prépolymère du mélange, destiné à former la nouvelle couche, à base d'au moins un monomère (méth)acrylique possède, un taux de conversion d'au moins 38 %.

**10.** Procédé conforme à l'une quelconque des revendications 2 à 8 caractérisé en ce que le prépolymère destiné à former la nouvelle couche possède un taux de conversion d'au moins 35 % et en ce que, préalablement à la polymérisation, on dépose sur la surface de l'optique organique un polymère A en solution ayant un poids moléculaire moyen en poids compris entre 30.000 et 250.000 et un indice de réfraction compris entre celui de la couche sur laquelle le dépôt est effectué et celui de la nouvelle couche, ladite solution de polymère ayant une teneur en extrait sec comprise entre 5 et 50 % en poids.

**11.** Procédé selon la revendication 10 caractérisé en ce que le solvant organique de ladite solution comprend au moins un solvant halogéné et/ou au moins un solvant cétonique.

**12.** Procédé selon l'une des revendications 10 et 11 caractérisé en ce que le polymère A est obtenu à partir de :
  - 50 à 100 % d'au moins un monomère fluoré de formule
    $H_2C = C(R_1)-C(O)-O-C(R_2)(R_3)-C_nF_{2n+1-m}H_m$ dans laquelle :
    ♦ $R_1$ est un radical méthyle, un atome d'hydrogène, de chlore ou de fluor,
    ♦ $R_2$ et $R_3$, identiques ou différents, sont choisis parmi H, $CH_3$, $CH_2$-$CH_3$ ou $CF_3$,
    ♦ n est compris entre 1 et 20,
    ♦ m est compris entre 2 et 2n,
  - et de 0 à 50 % en poids d'au moins un monomère vinylique.

13. Procédé selon l'une des revendications 1 à 12, caractérisé en ce que l'optique organique monocouche ou multicouche constitue le coeur d'une préforme de fibre optique et en ce qu'elle est préparée par usinage de blocs de polymères.

14. Procédé selon l'une des revendications 1 à 12, caractérisé en ce que l'optique organique monocouche ou multicouche constitue le coeur d'une préforme de fibre optique et en ce qu'elle est préparée par polymérisation d'au moins un prépolymère ayant un taux de conversion d'au moins 30 % sous une pression d'au moins 5 bars.

15. Procédé selon l'une des revendications 1 à 12, caractérisé en ce que l'optique organique monocouche et multicouche constitue le coeur d'une préforme de fibre optique et en ce qu'elle est préparée par extrusion de profilés cylindriques.

**Claims**

1. Process for the preparation of organic optics with index step(s), based on organic polymers, under inert atmosphere, characterized in that on at least a part of the clean surface of a monolayer or multilayer organic optic a new layer is formed by polymerizing at a pressure of at least 5 bars a mixture comprising at least one prepolymer essentially based on (meth)acrylic monomers, at least one polymerization initiator and at least one chain transfer agent.

2. Process according to Claim 1, characterized in that the organic optic is based essentially on (meth)-acrylic monomers, in that the prepolymer intended to form the new layer is based on at least one (meth)acrylic monomer and in that the polymerization is performed with a temperature of 30° to 120°C at the beginning of a cycle, reaching 120° to 160°C at the end of the cycle.

3. Process in accordance with either of Claims 1 and 2, characterized in that the polymerization is performed at a pressure of 15 bars.

4. Process in accordance with one of Claims 1 to 3, characterized in that the (meth)acrylic monomers employed for the preparation of the monolayer or multilayer organic optic are chosen from methyl (meth)acrylate, deuterated methyl methacrylate, ethyl (meth)acrylate, propyl (meth)acrylate, butyl (meth)acrylate, 2-ethylhexyl (meth)acrylate, phenyl methacrylate, cyclohexyl methacrylate and benzyl methacrylate.

5. Process in accordance with Claim 4, characterized in that the (meth) acrylic monomers are used in combination with comonomers in a quantity of up to 20 % by weight and chosen from the group made up of styrene and its homologues substituted by halogens or alkyl groups on the aromatic nucleus or on the vinyl functional group.

6. Process in accordance with Claim 5, characterized in that the layer of organic optic to be covered is obtained from a mixture of monomers comprising at least 80 % by weight of methyl methacrylate and not more than 20 % by weight of a monomer copolymerizable with methyl methacrylate.

7. Process in accordance with one of Claims 1 to 6, characterized in that the monomers used for the formation of the new layer deposited on the monolayer or multilayer organic optic are chosen from alkyl (meth)acrylates and fluoroalkyl (meth)acrylates, to which are optionally added one or more monomer(s) chosen from methyl (meth)acrylate, ethyl (meth)acrylate, propyl (meth)acrylate, butyl (meth) acrylate and 2-ethylhexyl (meth)acrylate.

8. Process in accordance with Claim 6, characterized in that the new layer comprises, per 100 parts by weight, more than 60 parts by weight of 2,2,2-trifluoroethyl methacrylate, 20 to 40 parts by weight of methyl methacrylate and 0 to 10 parts by weight of other vinyl monomers.

9. Process in accordance with one of Claims 2 to 8, characterized in that the prepolymer of the mixture intended to form the new layer, based on at least one (meth)acrylic monomer, has a degree of conversion of at least 38 %.

**10.** Process in accordance with any one of Claims 2 to 8, characterized in that the prepolymer intended to form the new layer has a degree of conversion of at least 35 % and in that, before the polymerization, there is deposited on the surface of the organic optic a polymer A in solution which has a weight-average molecular weight of between 30,000 and 250,000 and a refractive index between that of the layer on which the deposition is performed and that of the new layer, the said polymer solution having a solids content of between 5 and 50 % by weight.

**11.** Process according to Claim 10, characterized in that the organic solvent of the said solution comprises at least one halogenated solvent and/or at least one ketonic solvent.

**12.** Process according to either of Claims 10 and 11, characterized in that the polymer A is obtained from:
- 50 to 100 % of at least one fluorinated monomer of formula
  
  $H_2C = C(R_1)-C(O)-O-C(R_2)(R_3)-C_nF_{2n+1-m}H_m$ in which:
  
  $R_1$ is a methyl radical or a hydrogen, chlorine or fluorine atom,
  
  $R_2$ and $R_3$, which are identical or different, are chosen from H, $CH_3$, $CH_2$-$CH_3$ or $CF_3$,
  
  n is between 1 and 20,
  
  m is between 2 and 2n,
- and from 0 to 50 % by weight of at least one vinyl monomer.

**13.** Process according to one of Claims 1 to 12, characterized in that the monolayer or multilayer organic optic constitutes the core of an optical fibre preform and in that it is prepared by machining blocks of polymers.

**14.** Process according to one of Claims 1 to 12, characterized in that the monolayer or multilayer organic optic constitutes the core of an optical fibre preform and in that it is prepared by polymerization of at least one prepolymer which has a degree of conversion of at least 30 % at a pressure of at least 5 bars.

**15.** Process according to one of Claims 1 to 12, characterized in that the monolayer and multilayer organic optic constitutes the core of an optical fibre preform and in that it is prepared by extrusion of cylindrical sections.

**Patentansprüche**

**1.** Verfahren zur Herstellung von Organo-Optik mit Indexstufen, ausgehend von organischen Polymeren, unter Schutzgasatmosphäre, dadurch gekennzeichnet, daß man auf mindestens einen Teil der Oberfläche einer ein- oder mehrlagigen organo-optischen Schicht eine neue Schicht bildet, indem man bei einem Druck von mindestens 5 bar eine Mischung polymerisiert, die mindestens ein Prepolymer, hauptsächlich auf Basis von (Meth)acrylmonomeren, wenigstens einen Polymerisationsinitiator und mindestens ein Kettenübertragungsmittel enthält.

**2.** Verfahren nach Anspruch 1, dadurch gekennzeichnet, daß die Organo-Optik im wesentlichen aus (Meth)acrylmonomeren gebildet wird, und daß das Prepolymer, aus dem die neue Schicht gebildet wird, aus mindestens einem (Methy)acrylmonomeren besteht und daß die Polymerisation bei einer Temperatur am Zyklusanfang von 30 bis 120 °C durchgeführt wird, die am Zyklusende 120 bis 160 °C erreicht.

**3.** Verfahren nach einem der Ansprüche 1 oder 2, dadurch gekennzeichnet, daß die Polymerisation bei einem Druck von 15 bar durchgeführt wird.

**4.** Verfahren nach einem der Ansprüche 1 bis 3, dadurch gekennzeichnet, daß die (Meth)acrylmonomeren, die zur Herstellung der ein- oder mehrschichtigen Organo-Optik verwendet werden, aus den Methyl-(meth)acrylaten, deutrierten Methylmethacrylaten, Ethyl-(meth)-acrylaten, Propyl(meth)acrylaten, Butyl-(meth)acrylaten, Ethyl-2-hexyl-(meth)acrylaten, Phenylmethacrylaten, Cyclohexylmethacrylaten und Benzylmethacrylaten gewählt sind.

**5.** Verfahren nach Anspruch 4, dadurch gekennzeichnet, daß die (Meth)acrylmonomeren mit Comonomeren bis zu einem Anteil von 20 Gew.-% verbunden sind, die aus der Gruppe von Styrol und seinen

14

EP 0 323 353 B1

durch Halogene oder Alkylgruppen am aromatischen Kern oder an der Vinylfunktion substituierten Homologen gewählt sind.

6. Verfahren nach Anspruch 5, dadurch gekennzeichnet, daß die organo-optische Überzugsschicht aus einer Monomerenmischung erhalten wird, die mindestens 80 Masse-% Methylmethacrylat und höchstens 20 Masse-% eines mit Methylmethacrylat copolymerisationsfähigen Monomeres beinhaltet.

7. Verfahren nach einem der Ansprüche 1 bis 6, dadurch gekennzeichnet, daß die Monomeren, die zur Bildung der neuen Schicht auf der ein- oder mehrschichtigen Organo-Optik dienen, aus der Gruppe der Alkyl(meth)acrylate und der fluorierten Alky(meth)acrylate gewählt sind, die gegebenenfalls zu einem oder mehreren Monomeren hinzugegeben werden, die aus der Gruppe der Methyl(meth)acrylate, Ethyl-(meth)acrylate, Propyl(meth)acrylate, Butyl(meth)acrylate und Ethyl-2-hexyl(meth)acrylate gewählt sind.

8. Verfahren nach Anspruch 6, dadurch gekennzeichnet, daß die neue Schicht auf 100 Masseteile mehr als 60 Masseteile 2,2,2,-Trifluorethylmethacrylat, 20 bis 40 Gewichtsteile Methylmethacrylat und 0 bis 10 Gewichtsteile anderer vinylischer Monomere beinhaltet.

9. Verfahren nach einem der Ansprüche 2 bis 8, dadurch gekennzeichnet, daß das Mischungsprepolymer auf Basis mindestens eines (Meth)-acrylmonomers, aus dem die neue Schicht gebildet wird, einen Umwandlungsgrad von mindestens 38 % besitzt.

10. Verfahren nach einem der Ansprüche 2 bis 8, dadurch gekennzeichnet, daß das Prepolymer, aus dem die neue Schicht gebildet wird, einen Umwandlungsgrad von mindestens 35 % besitzt, und daß man vor der Polymerisation auf der organo-optischen Oberfläche eine Lösung eines Polymers A mit einer mittleren Molekularmasse zwischen 30.000 und 250.000 und einem Brechungsindex, der zwischen den der Schicht, die überzogen wird, und dem der neuen Schicht liegt, aufbringt; diese Polymerlösung hat einen Feststoffgehalt zwischen 5 und 50 Gew.-%

11. Verfahren nach Anspruch 10, dadurch gekennzeichnet, daß das organische Lösemittel der genannten Lösung mindestens ein halogeniertes und/oder mindestens ein ketonisches Lösungsmittel enthält.

12. Verfahren nach einem der Ansprüche 10 und 11, dadurch gekennzeichnet, daß das Polymer A erhalten wird aus:
   - 50 bis 100 % mindestens eines fluorierten Monomers der Formel
   $H_2C = C(R_1)-C(0)-0-C(R_2)(R_3)-C_nF_{2n+1-m}H_m$
   in der
     - $R_1$ ein Methylrest, ein Wasserstoff-, Chlor- oder Fluoratom ist,
     - $R_2$ und $R_3$, gleich oder verschieden, H, $CH_3$, $CH_2$-$CH_3$ oder $CF_3$ darstellen,
     - n eine Zahl zwischen 1 und 20 ist und
     - m eine Zahl zwischen 2 und 2n ist,
   - und 0 bis 50 Masse-% mindestens eines vinylischen Monomers.

13. Verfahren nach einem der Ansprüche 1 bis 12, dadurch gekennzeichnet, daß die ein- oder mehrlagige Organo-Optikschicht der Kern eines Vorformlings aus optischen Fasern ist und daß diese Vorformlinge durch Verformung von Polymerblöcken hergestellt werden.

14. Verfahren nach einem der Ansprüche 1 bis 12, daduch gekennzeichnet, daß die ein- oder mehrlagige organo-optische Schicht der Kern eines Vorformlings aus optischen Fasern ist und daß diese durch Polymerisation von mindestens einem Prepolymer mit einem Umwandlungsgrad von mindestens 30 % bei einem Druck von mindestens 5 bar hergestellt werden.

15. Verfahren nach einem der Ansprüche 1 bis 12, dadurch gekennzeichnet, daß die ein- oder mehrlagige organo-optische Schicht den Kern eines Vorformlings aus optischen Fasern bildet und daß dieser durch Extrusion von zylindrischen Profilen hergestellt ist.

15